# EUROPEAN PATENT SPECIFICATION

(11) **EP 2 851 234 B1**
(45) Date of publication and mention of the grant of the patent: **15.07.2020**
(21) Application number: 14184227.8
(22) Date of filing: 10.09.2014
(51) Int. Cl.: H01M 4/485, H01M 4/58, H01M 10/0525, H01M 10/42, H01M 10/44, H01M 10/6555, B60L 50/64, B60L 58/15, B60L 58/21, B60L 58/26, H01M 4/62, H01M 4/02

(54) **Battery pack and vehicle**
Batteriepack und Fahrzeug
Bloc batterie et véhicule

(30) Priority: 20.09.2013 JP 2013196211
(43) Date of publication of application: 25.03.2015
(73) Proprietor: Kabushiki Kaisha Toshiba, Tokyo 105-8001 (JP)
(72) Inventor: Takami, Norio, Tokyo, 105-8001 (JP); Matsuno, Shinsuke, Tokyo, 105-8001 (JP)
(74) Representative: Hoffmann Eitle

(56) References cited:
- JP-A- 2002 117 845
- JP-A- 2005 032 714
- JP-A- 2012 043 683
- US-A- 5 756 227
- US-A1- 2009 081 534
- US-A1- 2009 136 838
- US-A1- 2010 248 038
- US-A1- 2011 059 347
- US-A1- 2012 009 457
- US-A1- 2012 225 346

## Description

### FIELD

Embodiments described herein relate generally to a battery module, battery pack and vehicle.

### BACKGROUND

Nonaqueous electrolyte batteries using a lithium metal, a lithium alloy, a lithium compound, or a carbonaceous material as a negative electrode are anticipated to act as high-energy density batteries, and therefore research and development of such batteries have been carried out. The lithium ion batteries including a positive electrode containing LiCoO₂ or LiMn₂O₄ as an active material and a negative electrode containing a carbonaceous material which charges and discharges lithium have been put to broad use in portable devices.

When the battery is mounted on vehicles such as automobiles and trains, materials having excellent chemical or electrochemical stability, strength and corrosion resistance are required for materials constituting the positive electrode and the negative electrode, from the perspectives of storage performance, cycle performance, and long-term reliability under high output, or the like in a high-temperature environment (for example, 60°C or more). Further, when these materials are required to have high performances in cold climate areas, the materials are required to have a high output performance and a long-life performance in a low-temperature environment (for example, -40°C). Meanwhile, studies are still ongoing to develop a nonvolatile and nonflammable electrolyte solution from the viewpoint of improving a safety performance as a nonaqueous electrolyte. However, the nonaqueous electrolyte involves deterioration in output characteristics, a low-temperature performance and a long-life performance and therefore has not been put into practical use yet.

It is difficult to use a lithium ion battery by mounting it in an engine room of a vehicle in place of a lead-acid storage battery. Therefore, an improvement in high-temperature durability of the lithium ion battery is required in order to mount the lithium ion battery on the vehicle or the like.

From the viewpoint of higher output, forming a thin electrode has been considered. However, since the particle diameter of an active material is as large as several micrometers to tens of micrometers, sufficient output is not obtained. Particularly, in a low-temperature environment (-20°C or less), the utilization ratio of the active material is decreased, which impedes discharge. Further, since the strength of a current collector is insufficient when a thin negative electrode is formed to increase the density of the negative electrode, a battery capacity, an output performance, a cycle life, and reliability may be insufficient. When the particle diameter of a negative electrode active material is increased instead of forming the thin negative electrode, the interfacial resistance of the electrode is increased, which makes it more difficult to provide a high performance.

Meanwhile, the aggregation of lithium titanate compound secondary particles is suppressed by controlling the diameters of primary particles and secondary particles, and the production yield of a negative electrode having a large area for large-sized batteries is increased. However, sufficient durability is not obtained.

In order to improve thermal stability in a high-temperature environment, lithium iron phosphate (LiₓFePO₄), which is an example of a lithium phosphorus metal compound having an olivine crystal structure, is used as a positive electrode active material. However, since the lithium iron phosphate has low electrical conductivity, high output is not obtained by a battery. Further, since an iron component is dissolved from the lithium iron phosphate at a high temperature, and deposited on a negative electrode, this accelerates cycle life deterioration and reduces a cycle life at a high temperature (for example, 45°C or more). In addition, when a carbon material is used for the negative electrode, deterioration caused by metal lithium deposition is accelerated in a low-temperature environment. From the above, when the battery including the positive electrode containing the lithium iron phosphate is used in the vehicle, it is necessary to subject the battery to air cooling or water cooling to keep the temperature of the battery as constant as possible, which causes an increase in a volume or weight and a cost increase of a battery pack.

JP 2012 043683 A discloses a battery pack according to the preamble of claim 1 with two cells connected in series wherein each cell comprises LiFePO₄ as positive electrode material and Li₄Ti₅O₁₂ as negative electrode active material. Furthermore, the battery pack comprises a protective circuit for supervising each cell voltage. Thereby charge maximum and discharge minimum voltages are set to 4.2 V and 2 V, respectively.

Furthermore, JP 2005 032714 A and JP 2002 117845 A disclose single battery cells with an iron-containing lithium phosphorous material with a small amount of Mn.

### BRIEF DESCRIPTION OF THE DRAWINGS

FIG. 1 is a partial cross-sectional view of a battery module according to an embodiment along a line parallel with a long side face;
FIG. 2 is a sectional view the battery module according to the embodiment along a line parallel with a short side face;
FIG. 3 is a partial cross-sectional view of another battery module according to the embodiment along a line parallel with a long side face;
FIG. 4 is a configuration view of a battery pack according to an embodiment;
FIG. 5 is a perspective view showing the battery pack according to the embodiment;
FIG. 6 is a typical view showing a vehicle on which the battery module or battery pack according to the embodiment is mounted; and
FIG. 7 is a graph showing the relationship between a state of charge (SOC) and a charge voltage of a two-series battery for a battery pack of the Example.

### DETAILED DESCRIPTION

According to the present invention, a battery pack comprising at least one battery module; and a protective circuit which controls a charge maximum voltage of the at least one battery module to a range of 4 V to 5 V, wherein the at least one battery module includes two nonaqueous electrolyte batteries electrically connected in series is provided. Each of the nonaqueous electrolyte batteries includes a positive electrode, a negative electrode, and a nonaqueous electrolyte. The positive electrode contains an iron-containing phosphorus compound represented by LiₓFe_{1-y}Mn_{y}A_{z}PO₄ and having an olivine structure, wherein A is at least one element selected from the group consisting of V, Mg, Ni, Al, Sn, Zr, and Nb, and 0 ≤ x ≤ 1.1, 0.05 ≤ y ≤ 0.15, and 0 ≤ z ≤ 0.2 are set. The negative electrode contains a titanium-containing oxide. The battery module has a charge maximum voltage in a range of 4 V to 5 V.

According to the embodiment, a vehicle including at least one battery module of the embodiment or a battery pack of the embodiment arranged in an engine room is provided.

### (First embodiment)

According to a first embodiment, a battery module including two nonaqueous electrolyte batteries electrically connected in series is provided. Each of the nonaqueous electrolyte batteries includes a positive electrode, a negative electrode, and a nonaqueous electrolyte. The battery module has a charge maximum voltage in a range of 4 V to 5 V. The positive electrode contains an iron-containing phosphorus compound represented by LiₓFe_{1-y}Mn_{y}A_{z}PO₄ and having an olivine structure, wherein A is at least one element selected from the group consisting of V, Mg, Ni, Al, Sn, Zr, and Nb, and 0 ≤ x ≤ 1.1, 0.05 ≤ y ≤ 0.15, and 0 ≤ z ≤ 0.2 are set. The negative electrode contains a titanium-containing oxide.

Even if the charge voltage of one nonaqueous electrolyte battery does not reach a set value because of deterioration or the like in the case of charge in a high-temperature environment (for example, 70°C or more), and the charge voltage of the other nonaqueous electrolyte battery exceeds the set value, the potential of the positive electrode does not reach the oxidative decomposition potential of the nonaqueous electrolyte in the battery module of the first embodiment. Therefore, the battery module can avoid the oxidative decomposition of the nonaqueous electrolyte, and the deterioration of the positive electrode. Meanwhile, when the charge voltage of one nonaqueous electrolyte battery does not reach the set value in a case of charge in a high-temperature environment, a battery module having a charge maximum voltage exceeding 5 V cannot prevent the over-charge of the other nonaqueous electrolyte battery. As a result, the potential of the positive electrode reaches the oxidative decomposition potential of the nonaqueous electrolyte. This causes a decrease in the charge and discharge cycle performance of the battery module. A low charge maximum voltage is advantageous for improving high temperature durability. However, the capacity of the battery module is insufficient when the charge maximum voltage is less than 4 V.

Therefore, the charge/discharge cycle performance of the battery module in a high-temperature environment can be improved without impairing the discharge capacity of the battery module by setting the charge maximum voltage to the range of 4 V to 5 V. A more preferable range of the charge maximum voltage is 4.1 V to 4.8 V. Therefore, the battery module of the first embodiment can improve the durability at a high temperature of 70°C or more, for example, while attaining high capacity. Therefore, a long charge and discharge cycle life is obtained without using forced cooling means such as air cooling or water cooling even in a usage in which large generation of heat of the battery caused by repeating output and input at a large current cannot be avoided, such as in a hybrid vehicle, and thereby the volume and weight of a battery pack can be largely reduced.

Since high-temperature durability can be improved by controlling the charge maximum voltage of the battery module in the first embodiment, it is not necessary to monitor the voltage of a unit cell constituting the battery module, and the number of parts required for monitoring the voltage can be reduced as compared with the case where the voltage of the unit cell is monitored. Therefore, the weight or volume energy density of the battery pack can be increased.

Further, the battery module of the first embodiment can realize a battery module or battery pack having a voltage which is compatible with that of a lead-acid storage battery.

The titanium-containing oxide preferably contains at least one selected from the group consisting of a lithium titanium oxide having a ramsdellite structure, a lithium titanium oxide having a spinel structure, a titanium oxide having a monoclinic structure, and niobium titanium oxide. Since a lithium absorption-release potential relative to a lithium metal potential of the negative electrode is in a range of 1 V (vs. Li/Li⁺) to 2.5 V (vs. Li/Li⁺), a high capacity and an excellent life performance can be obtained by combining the negative electrode with the positive electrode of the embodiment to set the charge maximum voltage of the battery module to a range of 4 V to 5 V. A more preferable negative electrode potential range is 1.3 V (vs. Li/Li⁺) to 2 V (vs. Li/Li⁺), which provides a large improvement in a durability life performance.

The battery module of the first embodiment preferably has a discharge minimum voltage of 2 V or more. When the voltage of the battery module reaches the discharge minimum voltage during discharge, a discharge current is blocked. When the battery module has the discharge minimum voltage of 2 V or more, the influence of the over-discharge of the battery is decreased, which causes a decrease in cycle capacity deterioration. When the operating voltage of the battery module is less than the discharge minimum voltage, it is preferable to disable recharge to block a charge current. The upper limit of the discharge minimum voltage is desirably set to 2.4 V.

The form of the battery which constitutes the battery module is not particularly limited. For example, a rectangular battery, a cylindrical battery, and a slim-type battery can be used. Containers such as a metal container and a laminate film container can be used for the battery. Examples of the form of two-series connection include a structure in which two electrode groups accommodated in a container are electrically subjected to two-series connection in a state where the electrode groups are electrochemically insulated from each other by a partition wall, and electrical series connection of two electrode groups respectively accommodated in two containers. When the two batteries are subjected to electrical series connection, the two batteries may be mechanically attached firmly and joined to each other with an insulating adhesion material, cover, and film or the like interposed therebetween.

Hereinafter, the nonaqueous electrolyte battery constituting the battery module according to the first embodiment will be described. The nonaqueous electrolyte battery can include a positive electrode, a negative electrode, a nonaqueous electrolyte, a separator arranged between the positive electrode and the negative electrode, and a container in which the positive electrode, the negative electrode, the separator, and the nonaqueous electrolyte are accommodated. Hereinafter, the positive electrode, the negative electrode, the nonaqueous electrolyte, the separator, and the container will be described.

### 1) Positive electrode

This positive electrode includes a positive electrode current collector and a positive electrode material layer (positive electrode active material-containing layer) supported on one or both surfaces of the positive electrode current collector. The positive electrode material layer contains an active material, a conductive agent, and a binder. The conductive agent and the binder are optional components.

It is hard for a film to grow on the surface of the positive electrode during storage at a high temperature. The positive electrode contains an iron-containing phosphorus compound represented by LiₓFe_{1-y}Mn_{y}A_{z}PO₄ (A is at least one element selected from the group consisting of V, Mg, Ni, Al, Sn, Zr, and Nb, and 0 ≤ x ≤ 1.1, 0.05 ≤ y ≤ 0.15, and 0 ≤ z ≤ 0.2 are set.) and having an olivine structure, as a positive electrode active material. The positive electrode has a small resistance increase during storage, and can have an increased storage performance in a high-temperature environment. When y is 0.2 or less, a steep voltage change in a range of 4 V to 5 V in the voltage of a battery module is relieved, and a battery module capacity decrease caused by deviation of a battery capacity balance is suppressed, which can provide an excellent cycle life performance. According to the present invention, it is required that y is set to be in a range of 0.05 to 0.15. This further moderates a voltage increase in a range of 4.5 V to 5 V in the voltage of the battery module, provides no over-charge state even if there is the deviation of the battery capacity balance in the battery module. As a result, the influence of the generation of gas caused by the oxidative decomposition of the nonaqueous electrolyte can be suppressed, and the cycle life performance can be improved.

Even if the iron-containing phosphorus compound represented by LiₓFe_{1-y}Mn_{y}A_{z}PO₄ and having an olivine structure contains lithium during synthesis, the amount x of lithium may be 0 in the subsequent charge process.

The average primary particle diameter of phosphorus compound particles is preferably set to be 500 nm or less. When the average primary particle diameter is in the range, the influences of the electron conductivity resistance in the active material and of diffusion resistance of lithium ions can be decreased, which improves the output performance. The average primary particle diameter is more preferably in a range of 50 to 200 nm. The primary particles may be aggregated to form secondary particles. The average particle diameter of the secondary particles is desirably to set to be 10 µm or less.

At least a part of the particle surfaces of the phosphorus compound particles is preferably coated with a carbon-containing layer. The carbon-containing layer preferably has an average thickness of 10 nm or less, or preferably contains carbon material particles having an average particle diameter of 10 nm or less. The content of the carbon-containing layer is preferably 0.001 to 3% by weight of the positive electrode active material. Thereby, the positive electrode resistance and interfacial resistance between the positive electrode and the nonaqueous electrolyte can be decreased, which makes it possible to improve the output performance.

Examples of the conductive agent include acetylene black, carbon black, graphite, and carbon fibers. One or two or more types of the conductive agent may be used. Carbon fibers having a fiber diameter of 1 µm or less are preferably contained as the conductive agent for the positive electrode. When the carbon fibers having a fiber diameter of 1 µm or less are contained, the electron conductivity resistance of the positive electrode can be improved by the network of the carbon fibers having a thin fiber diameter, and thereby the resistance of the positive electrode can be effectively reduced. Particularly, carbon fibers formed by a vapor phase growth method and having a fiber diameter of 1 µm or less are preferable. The use of the carbon fibers can improve an electrical conductivity network in the positive electrode so that the output performance of the positive electrode can be largely improved.

Examples of the binder include polytetrafluoroethylene (PTFE), polyvinylidene fluoride (PVdF) and fluorine rubber. One or two or more types of the binder may be used.

It is preferable that the compounding ratios of the positive electrode active material, conductive agent, and binder are respectively in ranges of 80 to 95% by weight, 3 to 19% by weight, and 1 to 7% by weight.

The positive electrode is produced, for example, by suspending the positive electrode active material, the conductive agent and the binder in an appropriate solvent and applying the suspension to the current collector of an aluminum foil or aluminum alloy foil, followed by drying and pressing. The specific surface area of the positive electrode active material-containing layer using the BET method is measured in the same manner as in the case of the negative electrode and is preferably in a range of 0.1 to 2 m²/g.

As the current collector, an aluminum foil or an aluminum alloy foil is preferable and the thickness of the current collector is preferably 20 µm or less and more preferably 15 µm or less.

### 2) Negative electrode

This negative electrode includes a negative electrode current collector and a negative electrode material layer (negative electrode active material-containing layer) supported on one or both surfaces of the negative electrode current collector. The negative electrode material layer contains an active material, a conductive agent, and a binder. The conductive agent and the binder are optional components.

In a negative electrode containing a titanium-containing oxide as a negative electrode active material, a lithium absorption-release potential relative to a lithium metal electrode potential is preferably in a range of 1 V (vs. Li/Li⁺) to 2.5 V (vs. Li/Li⁺). This negative electrode potential range can provide a battery module having a high capacity and an excellent life performance. The negative electrode potential range is more preferably 1.3 V (vs. Li/Li⁺) to 2 V (vs. Li/Li⁺). One or two or more types of the negative electrode active material may be used.

Examples of the titanium-containing oxide include a titanium oxide, a lithium titanium oxide, and a niobium titanium oxide.

The titanium oxide can be represented by the general formula LiₐTiO₂ (0 ≤ a ≤ 2). In this case, a composition before charge is TiO₂. Examples of the titanium oxide include a titanium oxide having a monoclinic structure (bronze structure (B)), a titanium oxide having a rutile structure, and a titanium oxide having an anatase structure. TiO₂ (B) having a monoclinic structure (bronze structure (B)) is preferable, and low-crystalline oxides which are heat-treated at a temperature of 300 to 600°C are preferable.

Examples of the lithium titanium oxide include those having a spinel structure (for example, the general formula Li_{4/3+a}Ti_{5/3}O₄ (0 ≤ a ≤ 2)), those having a rhamsdelite structure (for example, the general formula Li₂₊ₐTi₃O₇ (0 ≤ a ≤ 1)), Li_{1+b}Ti₂O₄ (0 ≤ b ≤ 1), Li_{1.1+b}Ti_{1.8}O₄ (0 ≤ b ≤ 1), Li_{1.07+b}Ti_{1.86}O₄ (0 ≤ b ≤ 1), and a lithium titanium composite oxide containing at least one element selected from the group consisting of Nb, Mo, W, P, V, Sn, Cu, Ni, and Fe.

Examples of the niobium titanium oxide include those represented by the general formula Li_{c}Nb_{d}TiO₇ (0 ≤ c ≤ 5, 1 ≤ d ≤ 4).

The titanium-containing oxide preferably contains at least one selected from the group consisting of a lithium titanium oxide having a ramsdellite structure, a lithium titanium oxide having a spinel structure, a titanium oxide having a monoclinic structure and niobium titanium oxide. When the negative electrode contains at least one selected from the group consisting of a lithium titanium oxide having a ramsdellite structure, and a titanium oxide having a monoclinic structure and niobium titanium oxide, the battery can have a voltage curve with an appropriate inclination, and thus a state of charge (SOC) can be easily detected solely by monitoring the voltage. Even in the battery pack, the affect caused by variation between the batteries can be reduced, and it becomes possible to control the battery solely by monitoring the voltage.

The primary particles of the negative electrode active material preferably have an average particle diameter in a range of 0.001 µm to 1 µm. Excellent properties are obtained with particles of any shape, such as granules or fibers. In the case of fibers, a fiber diameter of the particles is preferably 0.1 µm or less.

The negative electrode active material desirably has an average particle diameter of 1 µm or less, and a specific surface area of 3 to 200 m²/g, which is measured according to the BET method by N₂ adsorption. This can further enhance the affinity of the negative electrode to the nonaqueous electrolyte.

The porosity of the negative electrode (excluding the current collector) is desirably set to be in a range of 20 to 50%. This makes it possible to obtain a negative electrode having high affinity to the nonaqueous electrolyte and a high density. The porosity is more preferably in a range of 25 to 40%.

The negative electrode current collector is desirably an aluminum foil or an aluminum alloy foil.

The thickness of the aluminum foil or aluminum alloy foil is preferably 20 µm or less and more preferably 15 µm or less. The purity of the aluminum foil is preferably 99.99% or more. As the aluminum alloys, alloys containing elements such as magnesium, zinc or silicon are preferable. Meanwhile, the content of transition metals such as iron, copper, nickel or chromium is preferably set to be 100 ppm or less.

Examples of the conductive agent include acetylene black, carbon black, cokes (desirably heat-treated at a temperature from 800°C to 2000°C and having an average particle diameter of 10 µm or less), carbon fibers, graphite, metal compound powders such as TiO, TiC, or TiN, and metal powders such as Al, Ni, Cu, or Fe. These may be used alone or as a mixture. The use of the carbon fibers having a fiber diameter of 1 µm or less provides a decrease in electrode resistance and an improvement in a cycle life performance.

Examples of the binder include polytetrafluoroethylene (PTFE), polyvinylidene fluoride (PVdF), fluorine rubbers, acrylic rubbers, styrene butadiene rubber, core-shell binders, and polyimide. One or two or more types of the binder may be used.

Preferably, the compounding ratios of the negative electrode active material, conductive agent and binder are respectively in ranges of 80 to 95% by weight, 1 to 18% by weight, and 2 to 7% by weight.

The negative electrode is produced, for example, by suspending the negative electrode active material, the conductive agent and the binder in an appropriate solvent and by applying the suspension to the current collector, followed by drying and pressing under heating.

### 3) Separator

A separator can be arranged between the positive electrode and the negative electrode. Examples of the separator include olefinic porous membranes made of polyethylene (PE), polypropylene (PP) or the like, and a cellulose fiber separator. Examples of the form of the separator include a non-woven fabric, a film, and paper. The separator has preferably a porosity of 50% or more. The cellulose fiber separator having a porosity of 60% or more has an excellent impregnating ability with the electrolyte, and can exhibit the high output performance from a low temperature to a high temperature. A more preferable range is from 62% to 80%.

When the diameters of the fibers which constitute the separator are set to be 10 µm or less, the affinity between the nonaqueous electrolyte and the separator can be improved, and thereby the battery resistance can be reduced. The fiber diameter is more preferably 3 µm or less.

The separator desirably has a thickness of 30 µm or less. The separator more preferably has a thickness of 20 to 100 µm and a density of 0.2 to 0.9 g/cm³. When the physical properties are in the ranges described above, an increase in the mechanical strength and a decrease in the battery resistance can be well-balanced, and a battery which has the high output and a property by which occurrence of an internal short-circuit is reduced can be provided. The thermal shrinkage is small in a high-temperature environment and an excellent high-temperature storage performance can also be obtained.

A non-woven fabric and porous membrane having a thickness of 30 µm or less, having a porosity of 50% or more, and containing cellulose or polyolefin can be used for the separator.

### 4) Nonaqueous electrolyte

Examples of the nonaqueous electrolyte include a liquid organic nonaqueous electrolyte prepared by dissolving an electrolyte in an organic solvent; a gelatinous organic nonaqueous electrolyte in which a liquid organic solvent and a polymeric material are combined; and a solid nonaqueous electrolyte in which a lithium salt electrolyte and a polymeric material are combined. A room temperature molten salt containing lithium ions (ionic liquid) may also be used as the nonaqueous electrolyte. Examples of the polymeric material include polyvinylidene fluoride (PVdF), polyacrylonitrile (PAN), and polyethylene oxide (PEO).

It is preferable that the nonaqueous electrolyte is in a liquid or gelatinous state, has a boiling point of 100°C or more, and contains an organic electrolyte or a room temperature molten salt.

The liquid organic electrolyte is prepared by dissolving the electrolyte in a concentration of 0.5 to 2.5 mol/L in an organic solvent. This concentration range can provide high output even in a low-temperature environment. The concentration is more preferably in a range of 1.5 to 2.5 mol/L.

Examples of the electrolyte include LiBF₄, LiPF₆, LiAsF₆, LiClO₄, LiCF₃SO₃, LiN(CF₃SO₂)₂, LiN(C₂F₅SO₂)₂, Li(CF₃SO₂)₃C, and LiB[(OCO)₂]₂. One or two or more types of the electrolyte may be used. Among these, lithium tetrafluoroborate (LiBF₄) is preferably contained. Therefore, the chemical stability of the organic solvent is improved, and the resistance of the film on the negative electrode can be decreased. As a result, the low-temperature performance and cycle life performance of the battery can be largely improved.

Examples of the organic solvent include a cyclic carbonate such as propylene carbonate (PC) or ethylene carbonate (EC); a chain carbonate such as diethyl carbonate (DEC), dimethyl carbonate (DMC) or methylethyl carbonate (MEC); a chain ether such as dimethoxyethane (DME) or diethoxyethane (DEE); a cyclic ether such as tetrahydrofuran (THF) or dioxolan (DOX); γ-butyrolactone (GBL), acetonitrile (AN), and sulfolane (SL). These organic solvents may be used alone or as a mixture of two kinds or more thereof. At least one selected from the group consisting of propylene carbonate (PC), ethylene carbonate (EC), and γ-butyrolactone (GBL) is contained, and thereby the boiling point of the organic solvent is increased to 200°C or more. Therefore, the thermal stability of the organic solvent can be improved. Particularly, since a high-concentration lithium salt can be dissolved in a nonaqueous solvent containing γ-butyrolactone (GBL), the output performance of the battery in a low-temperature environment can be improved.

A room temperature molten salt (ionic liquid) preferably contains lithium ions, organic cations, and organic anions. The room temperature molten salt is desirably in a liquid form at room temperature or less.

Hereinafter, the electrolyte containing the room temperature molten salt will be described.

The room temperature molten salt denotes a salt, at least a part of which exhibits a liquid state at room temperature. The term "room temperature" denotes a temperature range within which a power source is assumed to be generally operated. The upper limit of the temperature range within which the power source is assumed to be generally operated is about 120°C, or about 60°C in some cases, and the lower limit is about -40°C or about -20°C in some cases. Among them, it is desirable for the room temperature to be in a range of -20°C to 60°C.

An ionic liquid containing lithium ions, organic cations and organic anions is desirably used as the room temperature molten salt containing lithium ions. The ionic liquid is preferably in a liquid form even at room temperature or less.

Examples of the organic cations include alkyl imidazolium ion and quaternary ammonium ion having a skeleton represented by the following chemical formula (1):

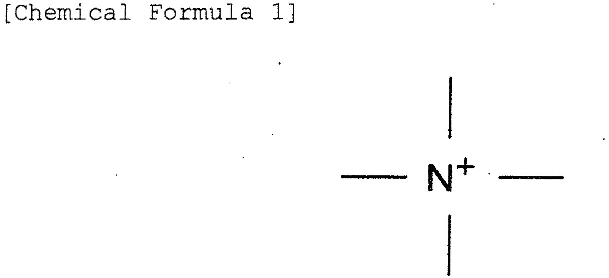

Dialkyl imidazolium ion, trialkyl imidazolium ion, and tetraalkyl imidazolium ion or the like are preferably used as the alkyl imidazolium ion. 1-methyl-3-ethyl imidazolium ion (MEI⁺) is preferably used as the dialkyl imidazolium ion. 1,2-diethyl-3-propyl imidazolium ion (DMPI⁺) is preferably used as the trialkyl imidazolium ion. 1,2-diethyl-3,4(5)-dimethyl imidazolium ion is preferably used as the tetraalkyl imidazolium ion.

Tetra alkyl ammonium ion and cyclic ammonium ion or the like are preferably used as the quaternary ammonium ion. Dimethyl ethyl methoxy ethyl ammonium ion, dimethyl ethyl methoxy methyl ammonium ion, dimethyl ethyl ethoxy ethyl ammonium ion, and trimethyl propyl ammonium ion are preferably used as the tetra alkyl ammonium ion.

The melting point of the nonaqueous electrolyte can be lowered to 100°C or less, and more preferably to 20°C or less by using the alkyl imidazolium ion or the quaternary ammonium ion (particularly, tetra alkyl ammonium ion). Further, the reactivity of the nonaqueous electrolyte with the negative electrode can be suppressed.

The lithium ion concentration is preferably 20 mol % or less, and more preferably in a range of 1 to 10 mol %. When the lithium ion concentration is in the range described above, the liquid room temperature molten salt can be formed easily even at a low temperature of 20°C or less. The viscosity of the nonaqueous electrolyte can also be lowered even at room temperature or less to increase the ionic conductivity.

The anion is preferably present together with at least one anion selected from BF₄⁻, PF₆⁻, AsF₆⁻, ClO₄⁻, CF₃SO₃⁻, CF₃COO⁻, CH₃COO⁻, CO₃²⁻, (FSO₂)₂N⁻, N(CF₃SO₂)₂⁻, N(C₂F₅SO₂)₂⁻, and (CF₃SO₂)₃C⁻ or the like. When a plurality of anions are present together, a room temperature molten salt having a melting point of 20°C or less can be easily formed. More preferred examples of the anions include BF₄⁻, (FSO₂)2N⁻, CF₃SO₃⁻, CF₃COO⁻, CH₃COO⁻, CO₃²⁻, N(CF₃SO₂)₂⁻, N(C₂F₅SO₂)₂⁻, and (CF₃SO₂)₃C⁻. When these anions are used, a room temperature molten salt having a melting point of 0°C or less is more easily formed.

### 5) Container

As the container in which the positive electrode, the negative electrode and the nonaqueous electrolyte are accommodated, a metal container or a laminate film container may be used.

As the metal container, metal cans which are made of aluminum, an aluminum alloy, iron or stainless steel or the like and have an angular shape or a cylinder form may be used. The plate thickness of the container is desirably set to be 0.5 mm or less and more preferably 0.3 mm or less.

Examples of the laminate film include multilayer films obtained by coating an aluminum foil with a resin film. As the resin, polymers such as polypropylene (PP), polyethylene (PE), nylon, or polyethylene terephthalate (PET) may be used. The thickness of the laminate film is preferably set to be 0.2 mm or less. The purity of the aluminum foil is preferably 99.5% or more.

The metal can made of an aluminum alloy is preferably made of an alloy which contains elements such as manganese, magnesium, zinc, or silicon, and has an aluminum purity of 99.8% or less. The strength of the metal can made of an aluminum alloy is largely increased, and thereby the wall thickness of the can be decreased. As a result, a thin, lightweight and high power battery having an excellent heat-radiating ability can be attained.

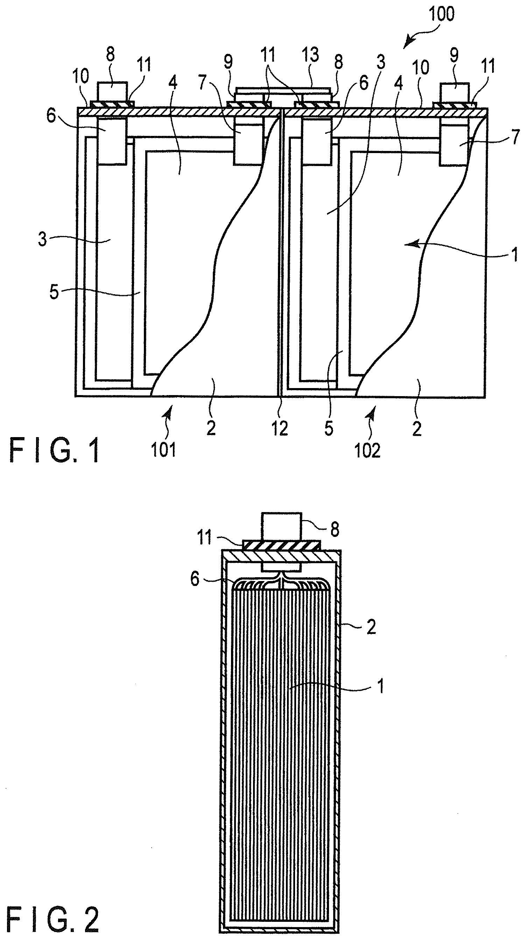

An example of the battery module of the first embodiment will be described with reference to FIGS. 1 to 3.

As shown in FIG. 1, a battery module 100 is obtained by electrically connecting two nonaqueous electrolyte batteries 101 and 102 as unit cells in series. Each of the nonaqueous electrolyte batteries 101 and 102 includes an electrode group 1, a rectangular cylindrical metal container 2, a metal seal plate 10, a positive electrode terminal 8, and a negative electrode terminal 9. The electrode group 1 is accommodated in the metal container 2. The electrode group 1 has a structure in which a positive electrode 3, a negative electrode 4 and a separator 5 are spirally wound with the separator 5 interposed between the positive electrode 3 and the negative electrode 4 so as to have a flat form. A nonaqueous electrolyte (not shown) is supported by the electrode group 1. As shown in FIG. 2, a band-like positive electrode lead 6 is electrically connected to each of a plurality of places of an end part of the positive electrode located on an end face of the electrode group 1. A band-like negative electrode lead 7 is electrically connected to each of a plurality of places of an end part of the negative electrode on the end face located on an opposite side of the end face. The seal plate 10 is fixed to an opening part of the metal container 2 by welding or the like. The positive electrode terminal 8 and the negative electrode terminal 9 are respectively provided so that both end faces are projected from a drawing port opened in the seal plate 10. The inside peripheral surface of each drawing port of the seal plate 10 is coated with an insulating member 11 to avoid the development of short circuits caused by the contact between the positive electrode terminal 8 and the negative electrode terminal 9. The plurality of positive electrode leads 6 are electrically connected to the positive electrode terminal 8 in a bundled state. The negative electrode leads 7 are connected to the negative electrode terminal 9 in a bundled state.

An insulating resin layer 12 is interposed between a short side face of the container 2 of the nonaqueous electrolyte battery 101 and a short side face of the container 2 of the nonaqueous electrolyte battery 102. Thereby, the two containers 2 are mechanically joined to each other. Examples of the insulating resin layer 12 include an insulating adhesive material, an insulating cover having adhesion properties, and an insulating sheet having adhesion properties. The negative electrode terminal 9 of one nonaqueous electrolyte battery 101 is electrically connected to the positive electrode terminal 8 of the other nonaqueous electrolyte battery 102 through a connecting lead 13 to thereby electrically connect the two nonaqueous electrolyte batteries 101 and 102 in series.

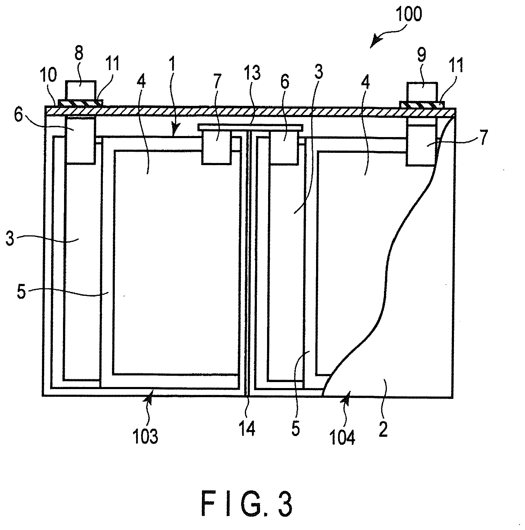

An example in which each of the two nonaqueous electrolyte batteries includes the container is shown in FIG. 1. However, the two nonaqueous electrolyte batteries can share one container. The example will be described with reference to FIG. 3. The reference numerals in FIG. 3 also apply to the same members as those described in FIG. 1 so as to avoid a description thereof.

Each of nonaqueous electrolyte batteries 103 and 104 includes an electrode group 1 and a nonaqueous electrolyte (not shown) supported by the electrode group 1. The nonaqueous electrolyte batteries 103 and 104 share a metal container 2 and a metal seal plate 10. The internal space of the metal container 2 is divided into two spaces by an insulating plate 14. The electrode group 1 of the nonaqueous electrolyte battery 103 is accommodated in one space, and the electrode group 1 of the nonaqueous electrolyte battery 104 is accommodated in the other space. The nonaqueous electrolyte supported by each of the electrode groups 1 is isolated by the insulating plate 14. The seal plate 10 is fixed to an opening part of the metal container 2 by welding or the like. A positive electrode terminal 8 and a negative electrode terminal 9 are provided on the seal plate 10 with an insulating member 11 interposed between the positive electrode terminal 8 and the seal plate 10 and between the negative electrode terminal 9 and the seal plate 10. The plurality of positive electrode leads 6 of the nonaqueous electrolyte battery 103 are electrically connected to the positive electrode terminal 8 in a bundled state. The plurality of negative electrode leads 7 of the nonaqueous electrolyte battery 104 are connected to the negative electrode terminal 9 in a bundled state. The plurality of negative electrode leads 7 of the nonaqueous electrolyte battery 103 are electrically connected to one end of the connecting lead 13 in a bundled state. The plurality of positive electrode leads 6 of the nonaqueous electrolyte battery 104 are electrically connected to the other end of the connecting lead 13 in a bundled state. Therefore, the two nonaqueous electrolyte batteries 103 and 104 are electrically connected in series.

The kind of the battery is not limited to the rectangular battery, and various kinds of batteries including cylindrical batteries, slim-type batteries, and coin-shaped batteries or the like can be made. The shape of the electrode group is not limited to the flat shape, and the shape may be a cylindrical shape and a laminated shape or the like.

The battery module of the first embodiment described above can improve the high-temperature durability of the battery module without impairing the discharge capacity of the battery module since the two nonaqueous electrolyte batteries which contain the positive electrode containing the iron-containing phosphorus compound represented by LiₓFe_{1-y}Mn_{y}A_{z}PO₄ and having an olivine structure and the negative electrode containing the titanium-containing oxide are electrically connected in series, and the battery module has a charge maximum voltage in a range of 4 V to 5 V.

### (Second embodiment)

According to a second embodiment, a battery pack including a battery module and a protective circuit is provided. The battery module includes two nonaqueous electrolyte batteries electrically connected in series. The nonaqueous electrolyte battery includes a positive electrode, a negative electrode, and a nonaqueous electrolyte. The positive electrode contains an iron-containing phosphorus compound represented by LiₓFe_{1-y}Mn_{y}A_{z}PO₄ and having an olivine structure, wherein A is at least one element selected from the group consisting of V, Mg, Ni, Al, Sn, Zr, and Nb, and 0 ≤ x ≤ 1.1, 0.05 ≤ y ≤ 0.015, and 0 ≤ z ≤ 0.2 are set. The negative electrode contains a titanium-containing oxide. The protective circuit controls a charge maximum voltage of the battery module to a range of 4 V to 5 V. According to the battery pack of the second embodiment, the battery pack containing the battery module of the first embodiment can be attained.

The protective circuit desirably blocks a charge current at the charge maximum voltage of the battery module to thereby control the charge maximum voltage of the battery module to a range of 4 V to 5 V. The protective circuit desirably blocks a current at the discharge minimum voltage of the battery module.

The battery pack can have excellent durability under a condition in which the battery generates much heat due to repeated output and input under a large current, such as use in a hybrid vehicle, or even if the battery pack is arranged in an engine room of a vehicle subjected to a high-temperature environment. This eliminates the use of forced air cooling and water cooling, and thereby the volume and weight of the battery pack can be reduced. A distance between the battery pack and an electromotive drive system device such as a motor or an inverter is shortened by placing the battery pack in the engine room of the vehicle subjected to the high-temperature environment. This prevents a decrease in the loss of output and input, and an improvement in gas mileage.

The battery pack can eliminate the use of forced air cooling and water cooling. However, the battery pack desirably further includes a heat sink arranged so as to be opposed to the battery module. Thereby, the high-temperature durability of the battery pack can be further improved.

The battery pack can further include a battery control system such as an over-discharge prevention circuit or an over-charge prevention circuit.

A metal can made of an aluminum alloy, iron, stainless steel or the like, and a plastic container or the like can be used for a casing in which the battery module and the protective circuit are accommodated. The plate thickness of the container is desirably set to be 0.5 mm or more.

The embodiments of the battery pack may be changed appropriately depending on a usage. As the usage of the battery pack, battery packs in which the cycle performance under large current is desired are preferred. Specific examples of the usage include a usage for a power source for a digital camera and an in-vehicle usage for a two-wheeled or four-wheeled hybrid electric vehicle, a two-wheeled or four-wheeled electric vehicle, and an electric power-assisted bicycle. The in-vehicle usage is preferred.

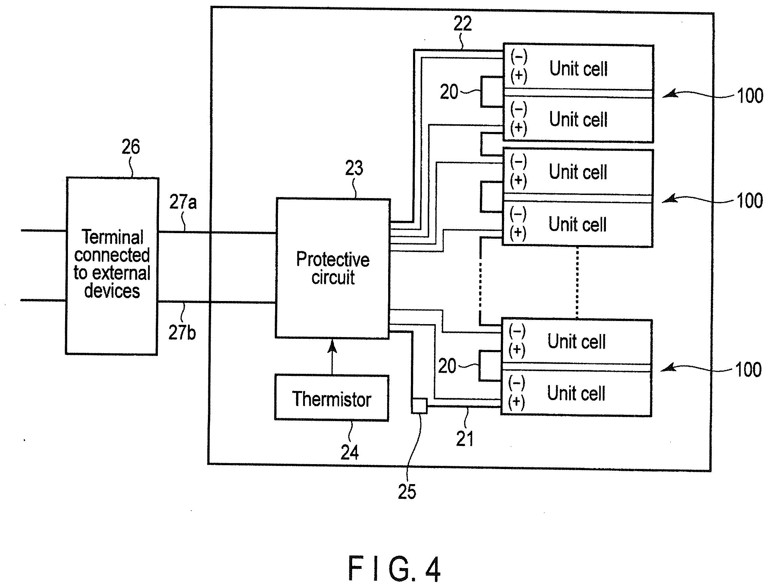

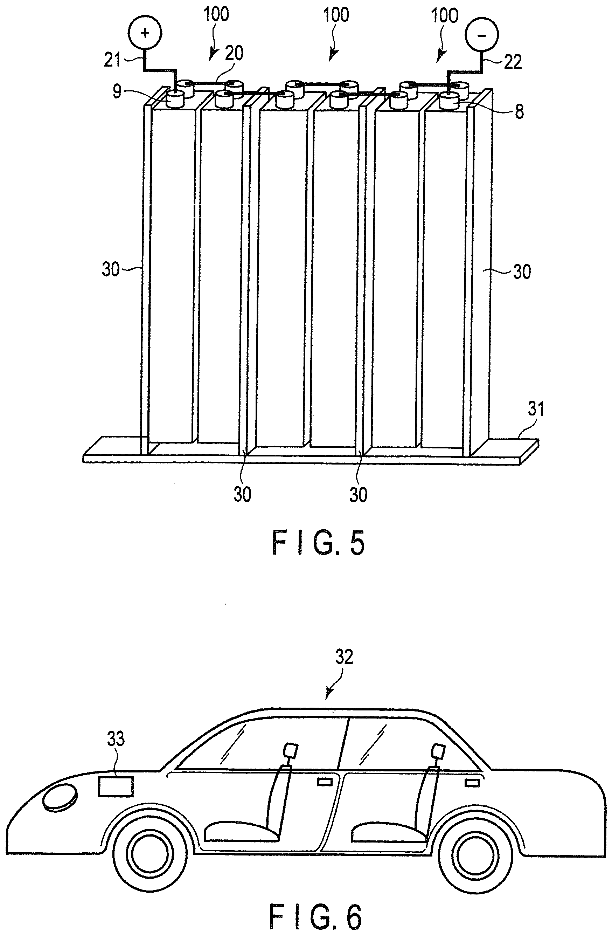

An example of the battery pack of the second embodiment will be described with reference to FIGS. 4 and 5.

The battery pack includes a plurality of battery modules 100 having a structure shown in FIG. 1 or 3, a protective circuit 23, a thermistor 24, a fuse 25, and an energizing terminal 26 connected to external devices. The battery modules 100 are electrically connected in series by a wiring 20. Therefore, the battery pack includes a battery module unit in which the plurality of battery modules 100 are electrically connected in series. A positive electrode wiring 21 and negative electrode wiring 22 of the battery module unit are electrically connected to the protective circuit 23. The thermistor 24 is electrically connected to the protective circuit 23. The fuse 25 is provided on the positive electrode wiring 21. A negative electrode wiring 27a and positive electrode wiring 27b of the protective circuit 23 are electrically connected to the energizing terminal 26 connected to external devices.

The thermistor 24 detects the temperature of the battery module unit, and transmits the detection signal to the protective circuit 23. The protective circuit 23 monitors the charge maximum voltage and discharge minimum voltage of the battery module 100. When the charge maximum voltage or the discharge minimum voltage exceeds a threshold value, the thermistor 24 blocks a current flowing into the negative electrode wiring 27a and the positive electrode wiring 27b between the protective circuit 23 and the energizing terminal 26 connected to external devices.

FIG. 5 shows an example of a battery pack in which a heat sink is provided in the battery module unit. As shown in FIG. 5, the battery module unit includes a plurality of battery modules 100. In each of the battery modules 100, a positive electrode terminal 8 of one nonaqueous electrolyte battery and a negative electrode terminal 9 of the other nonaqueous electrolyte battery are electrically connected in series by a wiring 20. For example, a nonaqueous electrolyte battery having a structure shown in FIG. 1 or 3 is used. The battery modules 100 are electrically connected in series. Specifically, the positive electrode terminal 8 of the battery module 100 and the negative electrode terminal 9 of the battery module 100 adjacent to the battery module are electrically connected in series by the wiring 20. A positive electrode wiring 21 and negative electrode wiring 22 of the battery module unit are electrically connected to a protective circuit (not shown).

A rectangular plate-like first heat sink 30 is arranged on an outer side face of a container of each of the nonaqueous electrolyte batteries located in both ends in the sequence of the battery module unit and between the battery modules 100. Meanwhile, a rectangular plate-like second heat sink 31 is arranged on the bottom part of the battery module unit.

At least one of the first and second heat sinks 30 and 31 may be used as the heat sink instead of using both the first and second heat sinks 30 and 31.

Since the battery pack of the second embodiment described above includes the protective circuit which controls the charge maximum voltage of the battery module to a range of 4 V to 5 V, the first battery module having excellent high-temperature durability while maintaining a high capacity can be attained.

### (Third embodiment)

According to a third embodiment, a vehicle including at least one battery module of the first embodiment or at least one battery pack of the second embodiment is provided. Examples of the vehicle include a two-wheeled or four-wheeled hybrid electric vehicle, a two-wheeled or four-wheeled electric vehicle, and an electric power-assisted bicycle.

An example of the vehicle of the third embodiment is shown in FIG. 6. As shown in FIG. 6, in a vehicle 32 of the third embodiment, the battery module 33 of the first embodiment is mounted in an engine room. The battery pack of the second embodiment can also be mounted instead of the battery module of the first embodiment. A distance between the battery pack and an electromotive drive system device such as a motor or an inverter is shortened by placing the battery module or the battery pack in the engine room of the vehicle subjected to a high-temperature environment. This prevents a decrease in the loss of output and input, and an improvement in gas mileage.

Since the vehicle of the third embodiment includes the battery module of the first embodiment or the battery pack of the second embodiment, the vehicle on which an electrochemical device having excellent high-temperature durability while maintaining a high capacity is mounted can be provided.

### Examples

Hereinafter, the embodiments will be described in detail by way of Examples with reference to the drawings. However, the embodiments are not limited by the following Examples.

### (Example 1) - not forming part of the present invention

An olivine structured LiFePO₄ having a surface on which carbon microparticles (average particle diameter: 5 nm) were deposited (deposition amount of 0.1% by weight), and having an average primary particle diameter of 100 nm was used as a positive electrode active material. For this active material, 3% by weight of carbon fibers produced by a vapor phase deposition method and having a fiber diameter of 0.1 µm and 5% by weight of a graphite powder based on the total weight of a positive electrode as conductive agents, and 5% by weight of PVdF based on the total weight of the positive electrode as a binder were formulated and dispersed in an n-methylpyrrolidone (NMP) solvent to prepare a slurry. The obtained slurry was applied to both surfaces of an aluminum alloy foil (purity: 99%) having a thickness of 15 µm, followed by drying and pressing to produce a positive electrode which has a positive electrode active material-containing layer formed on each surface and having a thickness of 43 µm and a density of 2.2 g/cm³. The specific surface area of the positive electrode active material-containing layer was 5 m²/g.

A negative electrode active material was prepared by mixing lithium titanate (Li₄Ti₅O₁₂) powder having a spinel structure and TiO₂ (B) powder having a monoclinic structure in a weight ratio of 1:1. The lithium titanate powder had an average primary particle diameter of 0.6 µm. In the lithium titanate powder, a lithium absorption-release potential relative to a lithium metal potential was 1.3 V to 2 V (vs. Li/Li⁺). The TiO₂ (B) powder had an average primary particle diameter of 0.1 µm. A lithium absorption-release potential of the TiO₂ (B) powder was 1.3 V to 2 V (vs. Li/Li⁺). The lithium titanate powder, the TiO₂ (B) powder, a graphite powder having an average particle diameter of 6 µm as a conductive agent, and PVdF as a binder were formulated in a weight ratio of 45:45:7:3 and dispersed in an n-methylpyrrolidone (NMP) solvent. The obtained dispersion was stirred at 1000 rpm for 2 hours by using a ball mill to prepare a slurry. The obtained slurry was applied to both surfaces of an aluminum alloy foil (purity: 99.3%) having a thickness of 15 µm, followed by drying and heat pressing to produce a negative electrode having one surface on which the negative electrode active material-containing layer having a thickness of 59 µm and having a density of 2.2 g/cm³ was present. The porosity of the negative electrode excluding a current collector was 35%. The BET specific surface area (surface area per 1 g of the negative electrode active material-containing layer) of the negative electrode active material-containing layer was 10 m²/g.

A method for measuring the particle diameter of the negative electrode active material will be given below.

A laser diffraction particle size analyzer (trade name: SALD-300, manufactured by Shimadzu Corporation) was used for the measurement of the particle diameter of the negative electrode active material. First, about 0.1 g of a sample, a surfactant, and 1 to 2 mL of distilled water were placed in a beaker, and then thoroughly stirred. The solution was then injected into a stirring water vessel. The light intensity distribution was measured 64 times at an interval of 2 seconds, and the particle size distribution data was analyzed to measure the particle diameter of the negative electrode active material.

The BET specific surface area of the negative electrode was measured using N₂ adsorption under the following conditions.

Two negative electrodes of 2 × 2 cm² were prepared by cutting as samples. As the BET specific surface area measuring device, a device manufactured by Yuasa Ionics Inc. was used, and nitrogen gas was used as an adsorption gas.

The porosity of the negative electrode was calculated as follows: the volume of the negative electrode active material-containing layer was compared with that of the negative electrode active material-containing layer having a porosity of 0%, and an increase in volume from the volume of the negative electrode active material-containing layer having a porosity of 0% was regarded as a pore volume. When the negative electrode active material-containing layer was formed on both surfaces of the current collector, the volume of the negative electrode active material-containing layer was the total volume of the negative electrode active material-containing layers formed on both surfaces.

Meanwhile, the positive electrode was coated with a regenerated cellulose fiber separator containing pulp as a raw material and having a thickness of 15 µm, a porosity of 65%, and an average fiber diameter of 1 µm. The negative electrode was faced to the positive electrode with the separator interposed therebetween. These were spirally coiled to produce an electrode group. A ratio (Sp/Sn) of an area (Sp) of the positive electrode active material-containing layer and an area (Sn) of the negative electrode active material-containing layer was set to 0.98. The electrode group was further pressed into a flat form. The electrode group was accommodated in a thin metal can made of an aluminum alloy (Al purity: 99%) having a thickness of 0.25 mm.

Meanwhile, 1.5 mol/L of lithium hexafluorophosphate (LiPF₆) as a lithium salt was dissolved in a mixture solvent (volume ratio: 1:2) of propylene carbonate (PC) and diethyl carbonate as an organic solvent to thereby prepare a liquid nonaqueous electrolyte (nonaqueous electrolytic solution). This nonaqueous electrolytic solution was injected into the electrode group in the container, to thereby produce two rectangular nonaqueous electrolyte secondary batteries having the structure shown in the above FIG. 1 and having a thickness of 13 mm, a width of 62 mm, and a height of 96 mm. The two secondary batteries were electrically connected in series using a connection lead made of an aluminum plate to thereby produce a battery module having the structure shown in FIG. 1.

### (Examples 2 to 16 and Comparative Examples 1 to 8)

Battery modules were produced in the same manner as in Example 1 mentioned above except that positive electrode active materials, negative electrode active materials, and charge maximum voltages were set to those shown in the following Tables 1 and 2. The indication of 1:1 in the negative electrode active material in the Tables represents a weight ratio of 1:1. Examples 3 to 9 and 12 employing LiFePO as positive electrode active material do not form part of the 4 present invention. Similarly, Example 16 does also not form part of the present invention.

There were measured the discharge capacities of the obtained battery modules of Examples and Comparative Examples when the battery modules were charged to 4.2 V at a constant current of 4 A at 25°C for 90 minutes, and then discharged to 3 V at a current of 4 A. The results are shown as discharge capacities at 25°C in Tables 1 and 2. There was repeated a charge and discharge cycle of charging the battery modules to the charge maximum voltages shown in Table 1 at a constant current of 4 A in an environment of 80°C, and of thereafter discharging the battery modules to the discharge minimum voltage of 3 V at a current of 4 A. The number of charge and discharge cycles when the capacity of the battery module reached 80% of the initial capacity is taken as a high-temperature cycle life at 80°C. The results are shown in Tables 1 and 2.

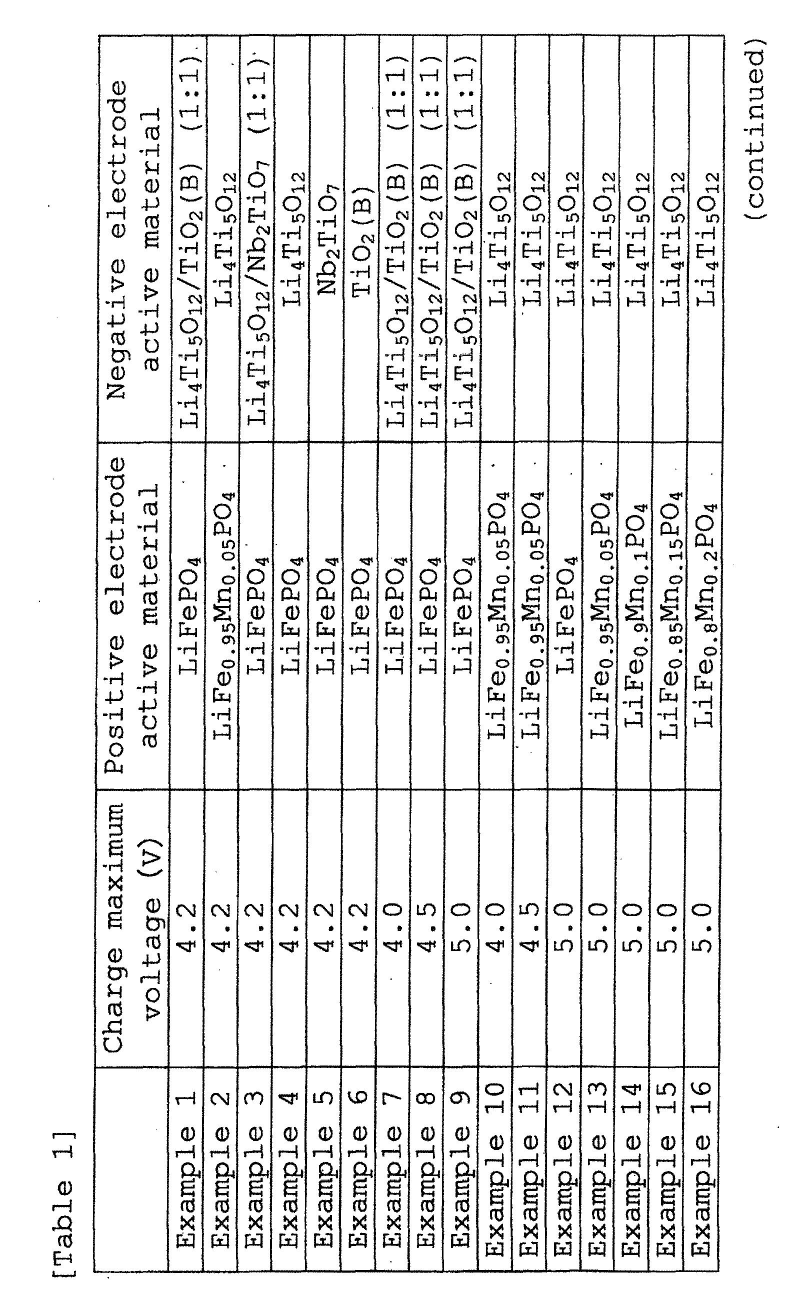

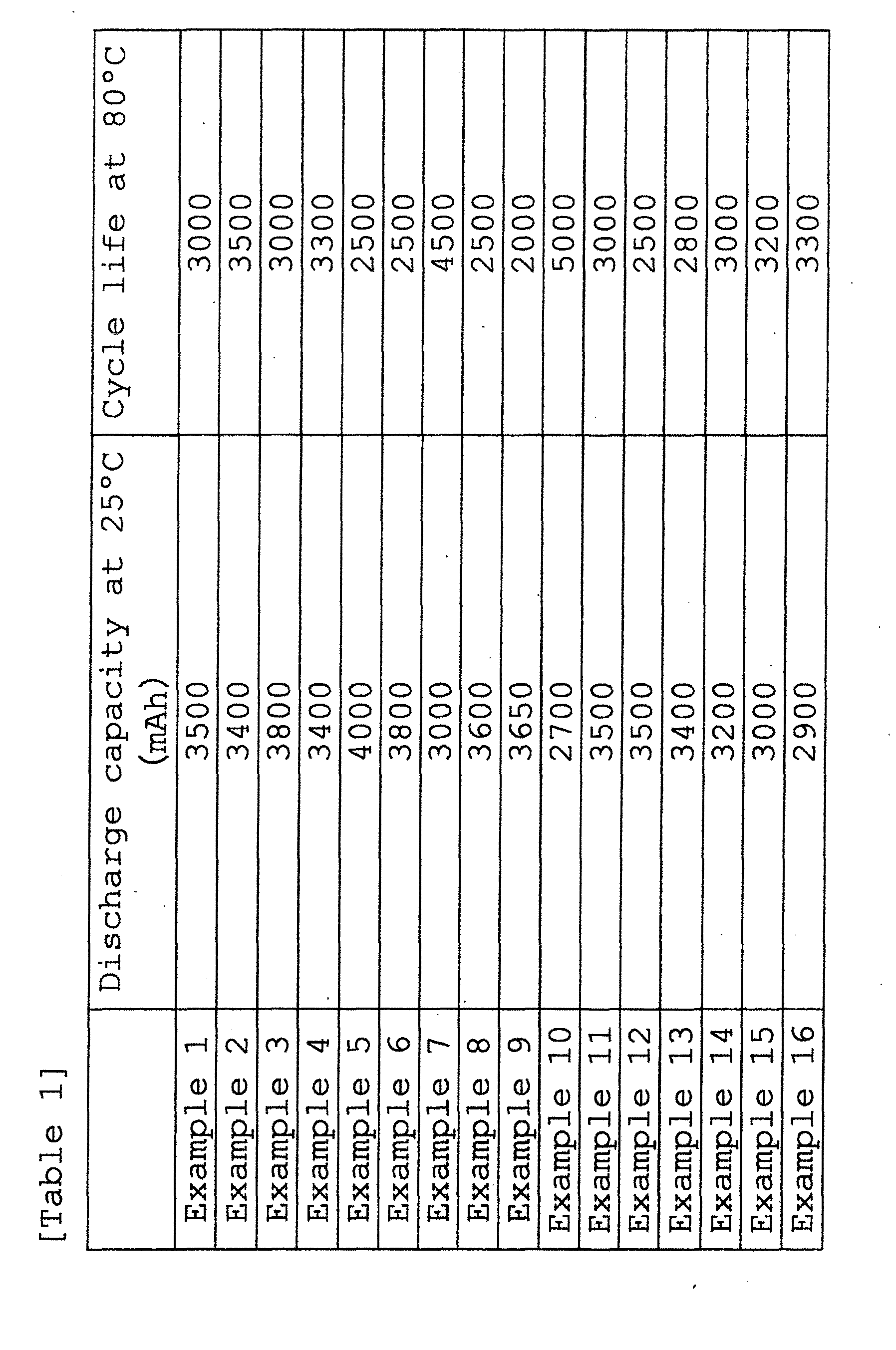

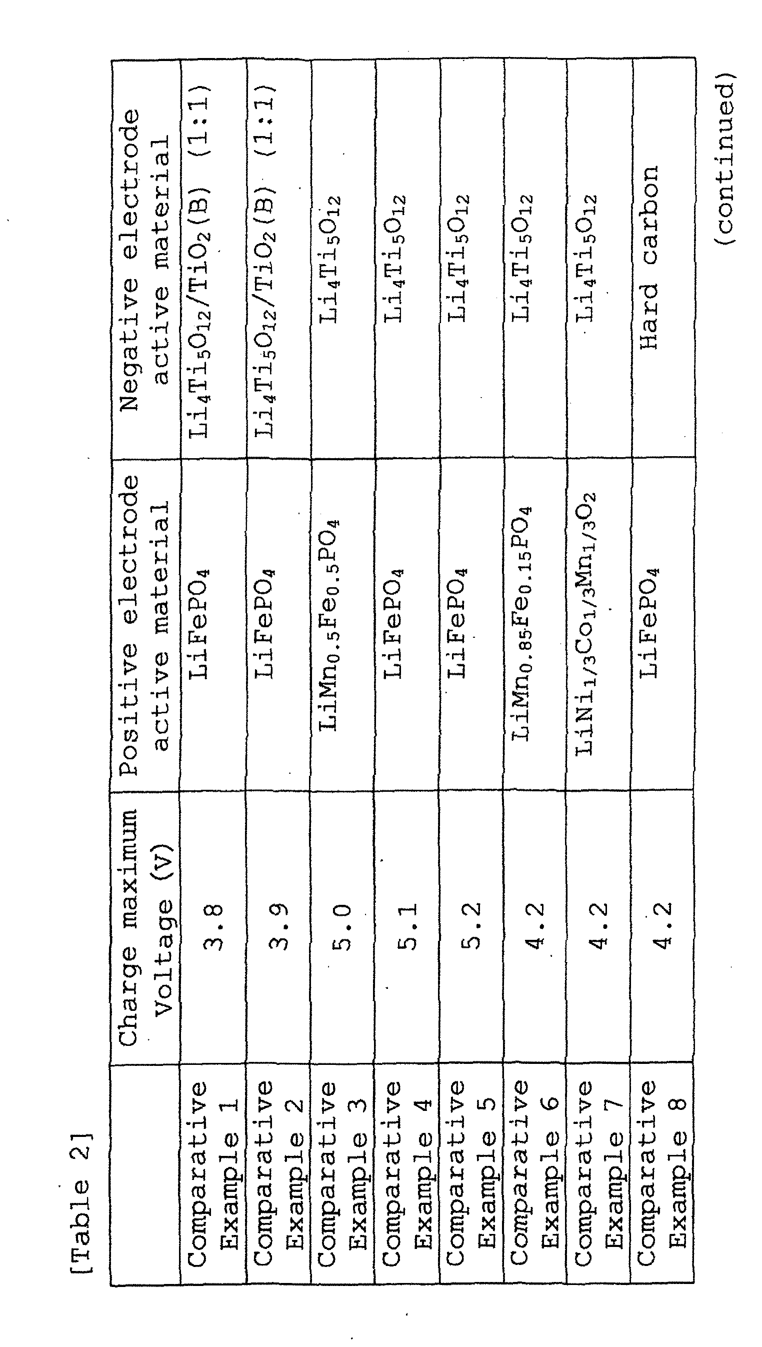

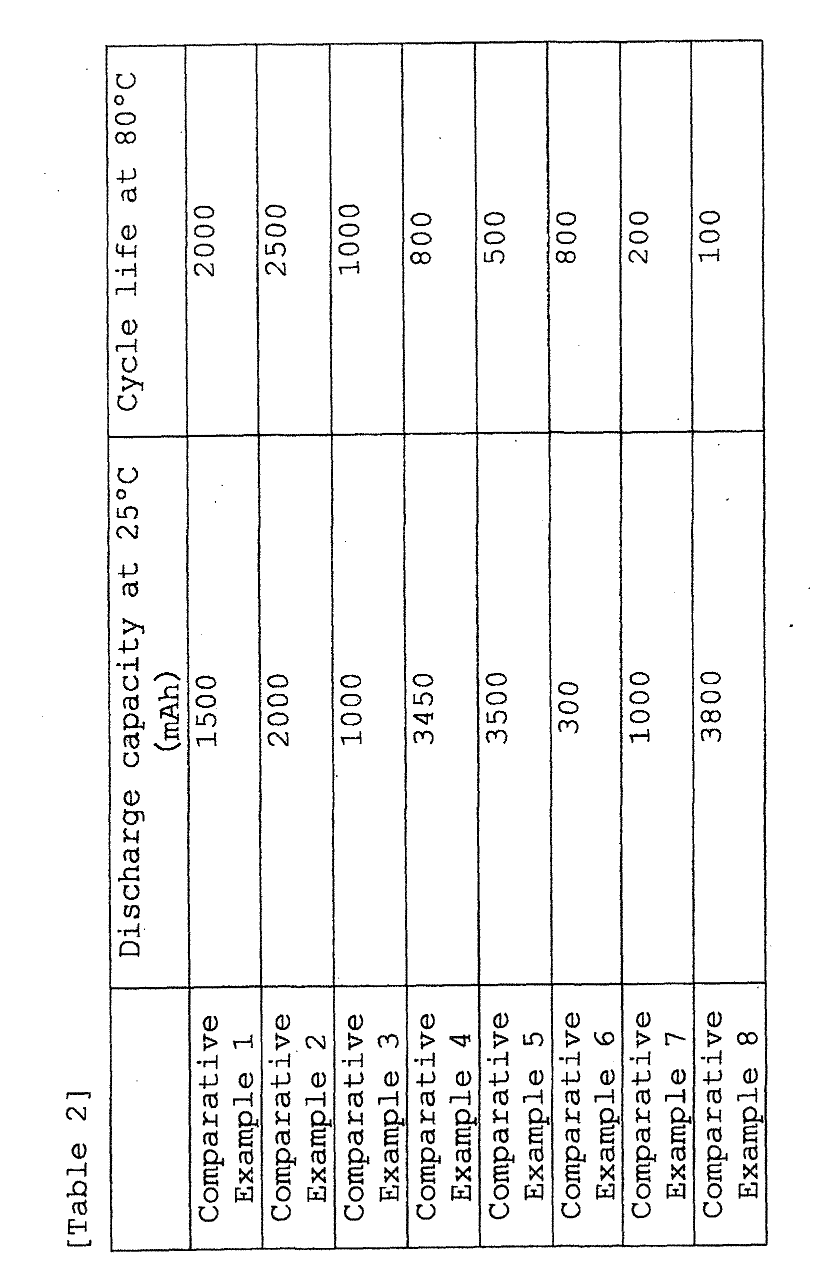

As is clear from Tables 1 and 2, the battery modules of Examples 1 to 16 have a more excellent balance of a battery capacity and cycle life performance at 80°C than those of Comparative Examples 1 to 8.

In each of Example 1 (not forming part of the present invention) and Comparative Example 7, the ten battery modules were connected in series to produce the battery module. A battery module unit was produced by connecting the obtained four battery modules in series, and a battery pack shown in FIG. 4 was produced. As shown in FIG. 5, in each of Example 1 and Comparative Example 7, first and second heat sinks were provided in the battery module unit. In each of the battery packs of Example 1 and Comparative Example 7, a protective circuit was set so that the charge maximum voltage and discharge minimum voltage of each of the battery modules, and the charge maximum voltage and discharge minimum voltage of the battery pack were respectively set to 4.2 V, 3 V, 168 V, and 120 V. These battery packs were subjected to a charge and discharge cycle at 1 C in an environment without forced cooling (an environment of 80°C). As a result, the cycle life performance of the battery pack including the battery module of Example 1 was 2800 times, by contrast, the cycle life performance of the battery pack including the battery module of Comparative Example 7 was 100 times. The excellent high-temperature durability life performance of the battery pack of the embodiment is confirmed, and a battery pack without forced cooling can be mounted on a vehicle.

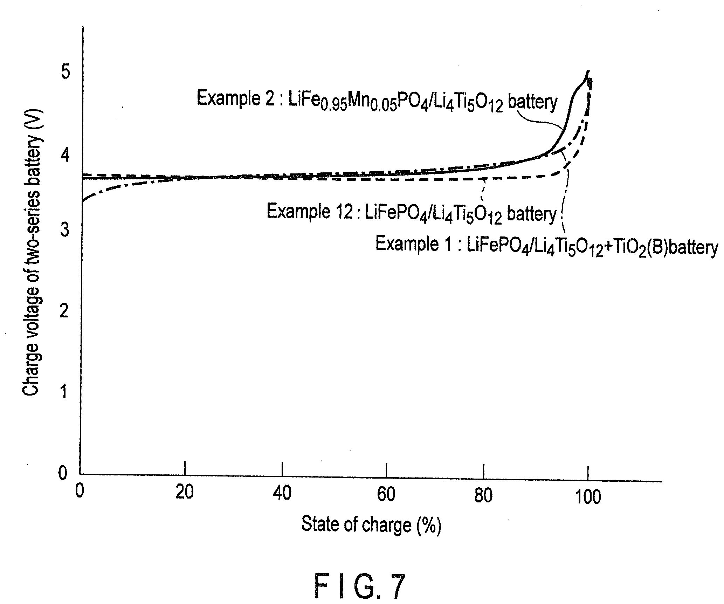

The relationship between a state of charge (SOC) and charge voltage of the battery module of the battery pack of each of Examples 1, 2, and 12 is shown in FIG. 7. As is clear from FIG. 7, a voltage change when the charge voltage is in a range of 4 V to 5 V is smaller in order of Example 12, Example 1, and Example 2. The phosphorus compound as the positive electrode active material contained Mn or the negative electrode contained the titanium oxide having a monoclinic structure, and thereby the voltage change when the charge voltage is in a range of 4 V to 5 V could be confirmed to be smaller.

The battery module according to at least one embodiment and the Example described above can improve the high-temperature durability of the battery module without impairing the discharge capacity of the battery module since the two nonaqueous electrolyte batteries containing the positive electrode containing the iron-containing phosphorus compound represented by LiₓFe_{1-y}Mn_{y}A_{z}PO₄ and having an olivine structure and the negative electrode containing the titanium-containing oxide are electrically connected in series, and the battery module has a charge maximum voltage in a range of 4 V to 5 V.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined in the accompanying claims.

## Claims

1. A battery pack comprising:
at least one battery module (100); and
a protective circuit (23) which controls a charge maximum voltage of the at least one battery module (100) to a range of 4 V to 5 V,
wherein the at least one battery module (100) comprises two nonaqueous electrolyte batteries (101), (102) electrically connected in series; and
each of the nonaqueous electrolyte batteries (101), (102) comprises:
a positive electrode (3) comprising iron-containing phosphorus compound particles,
a negative electrode (4) comprising a titanium-containing oxide; and
a nonaqueous electrolyte,
**characterized in that**
the iron-containing phosphorus compound particles are represented by LiₓFe_{1-y}Mn_{y}A_{z}PO₄ and have an olivine structure, wherein A is at least one element selected from the group consisting of V, Mg, Ni, Al, Sn, Zr, and Nb, and 0 ≤ x ≤ 1.1, y in the range of 0.05 to 0.15, and 0 ≤ z ≤ 0.2 are set.

2. The battery pack according to claim 1, further comprising a heat sink (30), (31) opposed to the at least one battery module (100).

3. The battery pack according to claim 1 or 2, further comprising a battery module unit which comprises the battery modules (100) electrically connected in series.

4. The battery pack according to any one of claims 1 to 3, wherein the titanium-containing oxide comprises at least one selected from the group consisting of a lithium titanium oxide having a ramsdellite structure, a lithium titanium oxide having a spinel structure, a titanium oxide having a monoclinic structure, and niobium titanium oxide.

5. The battery pack according to any one of claims 1 to 4, wherein the titanium-containing oxide has a lithium absorption-release potential relative to a lithium metal potential of 1 V (vs. Li/Li⁺) to 2.5 V (vs. Li/Li⁺) .

6. The battery pack according to any one of claims 1 to 5, wherein the iron-containing phosphorus compound particles have an average primary particle diameter of 500 nm or less.

7. The battery pack according to any one of claims 1 to 6, wherein the positive electrode (3) comprises a carbon-containing layer provided on at least a part of surfaces of the iron-containing phosphorus compound particles.

8. A vehicle (32) comprising a battery pack according to any one of claims 1 to 7 arranged in an engine room.

## Patentansprüche

1. Batteriepack, umfassend:
mindestens ein Batteriemodul (100); und
eine Schutzschaltung (23), die eine maximale Ladespannung des mindestens einen Batteriemoduls (100) auf einen Bereich von 4 V bis 5 V reguliert,
wobei das mindestens eine Batteriemodul (100) zwei nichtwässrige Elektrolytbatterien (101), (102) umfasst, die elektrisch in Reihe geschaltet sind; und
jede der nichtwässrigen Elektrolytbatterien (101), (102) umfasst:
eine positive Elektrode (3), umfassend eisenhaltige Phosphorverbindungspartikel,
eine negative Elektrode (4), umfassend ein titanhaltiges Oxid; und
einen nichtwässrigen Elektrolyt,
**dadurch gekennzeichnet, dass**
die eisenhaltigen Phosphorverbindungspartikel durch LiₓFe_{1-y}Mn_{y}A_{z}PO₄ dargestellt werden und eine Olivinstruktur aufweisen, wobei A mindestens ein Element ist, das aus der Gruppe ausgewählt ist, die aus V, Mg, Ni, Al, Sn, Zr und Nb besteht, und 0 ≤ x ≤ 1,1, y im Bereich von 0,05 bis 0,15 und 0 ≤ z ≤ 0,2 eingestellt sind.

2. Batteriepack gemäß Anspruch 1, weiterhin umfassend einen Kühlkörper (30), (31) gegenüber dem mindestens einen Batteriemodul (100).

3. Batteriepack gemäß Anspruch 1 oder 2, weiterhin umfassend eine Batteriemoduleinheit, die die elektrisch in Reihe geschalteten Batteriemodule (100) umfasst.

4. Batteriepack gemäß einem der Ansprüche 1 bis 3, wobei das titanhaltige Oxid mindestens eines umfasst, das aus der Gruppe ausgewählt ist, die aus einem Lithiumtitanoxid mit einer Ramsdellitstruktur, einem Lithiumtitanoxid mit einer Spinellstruktur, einem Titanoxid mit einer monoklinen Struktur und Niobtitanoxid besteht.

5. Batteriepack gemäß einem der Ansprüche 1 bis 4, wobei das titanhaltige Oxid ein Lithium-Absorptions-Freisetzungs-Potential relativ zum Lithiummetallpotential von 1 V (gegenüber Li/Li⁺) bis 2,5 V (gegenüber Li Li/Li⁺) aufweist.

6. Batteriepack gemäß einem der Ansprüche 1 bis 5, wobei die eisenhaltigen Phosphorverbindungspartikel einen durchschnittlichen Primärpartikeldurchmesser von 500 nm oder weniger aufweisen.

7. Batteriepack gemäß einem der Ansprüche 1 bis 6, wobei die positive Elektrode (3) eine kohlenstoffhaltige Schicht umfasst, die auf mindestens einem Teil der Oberflächen der eisenhaltigen Phosphorverbindungspartikel angeordnet ist.

8. Fahrzeug (32), umfassend einen Batteriepack gemäß einem der Ansprüche 1 bis 7, der in einem Motorraum angeordnet ist.

## Revendications

1. Bloc batterie comprenant :
au moins un module de batterie (100) ; et
un circuit protecteur (23) qui commande une tension maximum de charge de l'au moins un module de batterie (100) à une plage de 4 V à 5 V,
dans lequel l'au moins un module de batterie (100) comprend deux batteries d'électrolyte non aqueux (101), (102) raccordées électriquement en série ; et
chacune des batteries d'électrolyte non aqueux (101), (102) comprend :
une électrode positive (3) comprenant des particules composites de phosphore contenant du fer,
une électrode négative (4) comprenant un oxyde contenant du titane ; et
un électrolyte non aqueux,
**caractérisé en ce que**
les particules composites de phosphore contenant du fer sont représentées par LiₓFe_{1-y}Mn_{y}A_{z}PO₄ et présentent une structure d'olivine, dans lequel A est au moins un élément sélectionné à partir du groupe constitué de V, Mg, Ni, Al, Sn, Zr, et Nb, et 0 ≤ x ≤ 1,1, y dans la plage de 0,05 à 0,15, et 0 ≤ z ≤ 0,2 sont réglés.

2. Bloc batterie selon la revendication 1, comprenant en outre un dissipateur de chaleur (30), (31) opposé à l'au moins un module de batterie (100).

3. Bloc batterie selon la revendication 1 ou 2, comprenant en outre une unité de module de batterie qui comprend les modules de batterie (100) raccordés électriquement en série.

4. Bloc batterie selon l'une quelconque des revendications 1 à 3, dans lequel l'oxyde contenant du titane comprend au moins un sélectionné à partir du groupe constitué d'un oxyde de titane de lithium présentant une structure de ramsdellite, un oxyde de titane de lithium présentant une structure de spinelle, un oxyde de titane présentant une structure monoclinique, et un oxyde de titane de niobium.

5. Bloc batterie selon l'une quelconque des revendications 1 à 4, dans lequel l'oxyde contenant du titane présente un potentiel de libération-absorption de lithium relatif à un potentiel de métal de lithium de 1 V (vs. Li/Li⁺) à 2,5 V (vs. Li/Li⁺).

6. Bloc batterie selon l'une quelconque des revendications 1 à 5, dans lequel les particules composites de phosphore contenant du fer présentent un diamètre de particule primaire moyen de 500 nm ou moins.

7. Bloc batterie selon l'une quelconque des revendications 1 à 6, dans lequel l'électrode positive (3) comprend une couche contenant du carbone prévue sur au moins une partie des surfaces de particules composites de phosphore contenant du fer.

8. Véhicule (32) comprenant un bloc batterie selon l'une quelconque des revendications 1 à 7, agencé dans un compartiment moteur.
